Europäisches Patentamt

European Patent Office

Office européen des brevets

(19)

(11) Numéro de publication: **0 023 868 B1**

(12) **FASCICULE DE BREVET EUROPEEN**

(45) Date de publication du fascicule du brevet:
20.07.83

(51) Int. Cl.³: **G 11 B 7/12,** G 11 B 7/00

(21) Numéro de dépôt: 80401133.6

(22) Date de dépôt: 31.07.80

(54) **Dispositif optique d'accès à une piste portée par un support d'information et système de mémoire optique comportant un tel dispositif.**

(30) Priorité: 03.08.79 FR 7919973

(43) Date de publication de la demande:
11.02.81 Bulletin 81/6

(45) Mention de la délivrance du brevet:
20.07.83 Bulletin 83/29

(84) Etats contractants désignés:
DE GB IT NL SE

(56) Documents cités:
DE-A-2 634 243
DE-A-2 801 062
FR-A-2 291 663
FR-A-2312 091
FR-A-2 325 953
FR-A-2 399 087
FR-A-2 403 575
FR-A-2 440 055
GB-A-2 022 914

PATENTS ABSTRACTS OF JAPAN, vol. 3, no. 18, 16 février 1979, page 127 E 91

PATENTS ABSTRACTS OF JAPAN, vol. 2, no. 6, 17 janvier 1978, page 9921 E 77

(73) Titulaire: THOMSON-CSF, 173, Boulevard Haussmann, F-75379 Paris Cedex 08 (FR)

(72) Inventeur: Bricot, Claude, "THOMSON-CSF"
SCPI 173, Bld Haussmann, F-75360 Paris Cedex 08 (FR)
Inventeur: Leterme, Dominique, "THOMSON-CSF"
SCPI 173, Bld Haussmann, F-75360 Paris Cedex 08 (FR)

(74) Mandataire: Wang, Pierre et al, THOMSON-CSF
SCPI 173, Bld Haussmann, F-75379 Paris Cedex 08 (FR)

(56) Documents cités:

PATENTS ABSTRACTS OF JAPAN, vol. 3, no. 60, 23 mai 1979, page 133 E 112

Aide-mémoire de Physique par B. YAVORSKI et al, Traduction française, Editions MIR (PARIS) 1975

ACTORUM AG

Dispositif optique d'accès à une piste portée par un support d'information et système de mémoire optique comportant un tel dispositif

L'invention se rapporte à un dispositif optique d'accès à une piste sur un support d'information et à un système de mémoire optique comportant un tel dispositif.

L'invention concerne plus particulièrement les systèmes lecteurs et enregistreurs dans lequel le support d'information est un disque. Actuellement on peut enregistrer environ $10^{10}$ éléments binaires d'information sur un disque d'une trentaine de centimètres de diamètre. Ces systèmes peuvent être utilisés comme mémoire de masse pour des ensembles de traitement numérique de données. Ces systèmes doivent permettre un accès aléatoire à une partie prédéterminée des données enregistrées, par exemple un bloc de mots binaires de longueur fixe ou variable. D'autre part la vitesse de calcul des unités de traitement de l'information nécessite de nombreux échanges entre les mémoires périphériques et ces unités de calcul. Il est donc nécessaire que l'accès à une piste prédéterminée d'un support d'informations mobile se fasse dans le temps le plus court possible, ce pour lire des informations préenregistrées ou pour enregistrer ces informations, quelque soit la position de cette piste sur le disque. Le temps moyen d'accès doit être inférieur à 100 milli-secondes.

Le dispositifs d'accès à une piste actuellement réalisés sont essentiellement destinés à des disques sur lesquels l'information enregistrée contient un signal vidéo. Le temps d'accès à l'information est dans ces systèmes de l'ordre de quelques secondes, ce qui est suffisant pour cette application.

Dans les dispositifs d'accès antérieurement connus, le positionnement radial correct d'une tête d'enregistrement et/ou lecture optique est réalisé par des moyens mécaniques assurant soit le déplacement de cette tête, soit le plus souvent le déplacement du disque. Lorsque la tête de lecture et le disque sont correctement positionnés l'un par rapport à l'autre, le suivi radial de la piste circulaire ou en hélice sur laquelle doit être (ou est enregistrée) l'information est réalisé à l'aide d'un miroir galvanométrique mobile autour d'un axe parallèle au plan du disque qui réfléchit un faisceau produit par au moins une source d'énergie lumineuse comprenant un laser. La tête comporte également un dispositif assurant l'asservissement vertical de l'objectif servant à l'enregistrement-lecture.

Quelle que soit la solution retenue, l'équipage mobile a une masse trop importante pour être compatible avec les temps d'accès moyens souhaités en informatique. A titre d'exemple, dans la solution consistant à déplacer le disque, celui-ci étant solidaire d'un mécanisme tournant comprenant notamment le moteur d'entrainement, on doit mettre en mouvement une masse de l'ordre de 1 Kg. Pour pallier ces inconvénients, l'invention propose un dispositif d'accès dans lequel seule la tête d'enregistrement-lecture est mobile, la source d'énergie à laser produisant des faisceaux de lecture et écriture à rayons parallèles restant fixe et des moyens optiques du type afocal assurant la liaison optique entre la source d'énergie et la tête d'enregistrement-lecture, ces moyens étant traversés par les deux faisceaux et présentant un grossissement suffisant pour que les faisceaux émergeant des moyens optiques recouvrent en sa totalité la pupille d'entrée de l'objectif, quelle que soit la position de la tête d'enregistrement-lecture; la direction de propagation d'un des faisceaux de rayons parallèles étant en outre confondue avec l'axe optique des moyens optiques te type afocal pour y pénétrer sous incidence normale et la direction de l'autre faisceau de rayons parallèles faisant un angle avec l'axe optique de faible amplitude. Selon un aspect supplémentaire de l'invention, il est fait usage de faisceaux polarisés linéairement et de directions de polarisation orthogonales entre elles.

Les moyens de type afocal peuvent être analogues à ceux décrits dans les abrégés de demande de brevet japonais JP-A-53 147 505 et JP-A-53 147 504 parus dans «PATENT ABSTRACT OF JAPAN», vol. 3, n° 18, 16 Février 1979, page 127 E 91 ou encore dans la demande de brevet japonais JP-A-52 119 952 paru dans la même publication, vol. 2, n° 6, 27 Janvier 1978, page 9921 E 77. Dans ces abrégés, il est décrit un expanseur de faisceau parallèle comprenant deux lentilles.

Des systèmes optiques mettant en oeuvre deux faisceaux distincts-polarisés linéairement sont connus. L'état de la technique peut être illustré par exemple par le document DE-A-2 634 243. Ce document décrit également la possibilité d'utiliser un séparateur biréfringent pour discriminer les faisceaux.

La mise en oeuvre de deux faisceaux polarisés linéairement est encore décrite dans le document FR-A-2 291 663. Il est fait usage de lame quart d'onde pour transformer ces polarisations linéaires en polarisation circulaire et inversement.

On peut faire varier la puissance lumineuse transmise par un faisceau de rayons polarisés linéairement en faisant tourner le plan de polarisation, en décomposant ce dernier en un rayon ordinaire et un rayon extraordinaire et en sélectionnant l'un des rayons. Pour ce faire, il peut être utilisé une lame demi-onde de la manière décrite dans le livre: «AIDE MEMOIRE DE PHYSIQUE» par YAVORSKI et al; traduction française, éditions MIR (MOSCOU; U.R.S.S.); page 692, alinéa «7°», publiée en 1975.

Enfin l'état de la technique concernant un système de mémoire optique comportant d'une part un support mobile d'information, constitué d'un disque porteur de sillon en spirale, et d'autre part, un équipage mobile se déplaçant radialement dans un plan parallèle à la surface du disque, est illustré, par exemple, par le document FR-A-2 399 087.

L'invention a pour objet un dispositif optique d'accès à une piste sur un support d'information mobile, enregistrable ou lisible optiquement par un rayonnement focalisé, comportant une source d'énergie radiante fixe comprenant des premier et second éléments rayonnants produisant respectivement des premier et second faisceaux des rayons parallèles captés par un équipage mobile se déplaçant parallèlement à un axe déterminé par rapport au support d'information, comprenant un miroir de renvoi et un objectif focalisant le faisceau sur une piste prédéterminée du support; et des moyens optiques grossissants fixes de type afocal insérés entre l'équipage mobile et les éléments rayonnants et dont l'axe optique est confondu avec ledit axe déterminé; dispositif caractérisé en ce que les moyens optiques grossissants fixes de type afocal sont traversés simultanément par lesdits premier et second faisceaux de rayons parallèles et en ce qu'ils présentent un grossissement suffisant pour assurer simultanément un recouvrement total de la pupille d'entrée de l'objectif par les premier et second faisceaux de rayons parallèles; une faible inclinaison l'un par rapport à l'autre, de ces faisceaux dans la portion de chemins optiques comprise entre l'équipement mobile et l'aval des moyens optiques grossissants fixes te type afocal pour conserver ce recouvrement lors des déplacements de cet équipage mobile parallèlement à l'axe déterminé et une forte inclinaison l'un par rapport à l'autre de ces faisceaux de rayons parallèles en amont des moyens optiques grossissants fixes de type afocal de manière à séparer les chemins optiques de ces faisceaux de rayons parallèles; la direction de propagation du premier faisceau de rayons parallèles étant confondue avec ledit axe optique.

L'invention se rapporte également à un système de mémoire optique comportant un support enregistrable lisible optiquement ainsi qu'un tel dispositif d'accès à une piste portée par ce support selon l'une quelconque des revendications 4 à 9.

L'invention sera mieux comprise et d'autres caractéristiques apparaîtront à l'aide de la description qui suit en référence aux figures annexées et parmi lesquelles:

la figure 1 est un schéma optique d'un dispositif d'accès à une piste sur un support mobile selon l'invention;

la figure 2 illustre le fonctionnement de ce dispositif;

la figure 3 illustre le fonctionnement d'un système optique enregistreur-lecteur comprenant le dispositif de l'invention;

les figures 4 et 5 sont relatives à des modes de fonctionnement particuliers du système optique;

la figure 6 illustre de façon plus détaillée un élément particulier du système optique;

la figure 7 est une seconde variante d'un système optique comportant le dispositif de l'invention.

Dans ce qui suit les éléments communs à deux ou plusieurs figures portent la même référence et ne seront décrits qu'une seule fois.

L'invention concernant le dispositif d'accès à une des pistes d'un support d'information et notamment à une piste prédéterminée d'un disque, il est utile de rappeler les éléments constitutifs d'un système enregistreur et/ou lecteur d'un tel support. Plus particulièrement l'invention concerne un système optique enregistreur-lecteur dont la tête de lecture est mobile le long d'un axe passant par le centre du disque support d'information. On peut utiliser un tel disque soit pour inscrire des informations en un point déterminé d'une piste lisse inscrite au préalable, soit pour lire des informations inscrites en un point quelconque de cette piste. Le disque, d'un diamètre d'environ 30 cm est animé d'un mouvement de rotation qui lui est communiqué par un moteur d'entrainement solidaire du chassis du système optique d'enregistrement-lecture. Selon l'invention, le dispositif d'accès a une piste prédéterminée du disque comprend une partie fixe constituée par les sources d'énergie lumineuse et une partie mobile constituée par la tête d'enregistrement-lecture. Cette dernière comprend un objectif du type microscope, solidaire d'une bobine électromagnétique se déplaçant dans le champ magnétique d'un aimant permanent assurant l'asservissement vertical et un miroir galvanométrique assurant l'asservissement radial. Les sources d'énergie lumineuse, comme il est également connu, comprennent des sources lasers, par exemple des lasers à gaz He Ne. Ces lasers délivrent un faisceau parallèle polarisé. La section de ce faisceau est très faible. Le faisceau laser doit être agrandi de façon à recouvrir la pupille d'entrée de l'objectif, ce quelque soit la position de l'objectif le long de l'axe optique. Pour réaliser cette première exigence, l'invention propose d'intercaler entre les sources d'énergie lumineuse et la tête d'enregistrement-lecture mobile une optique de type afocal.

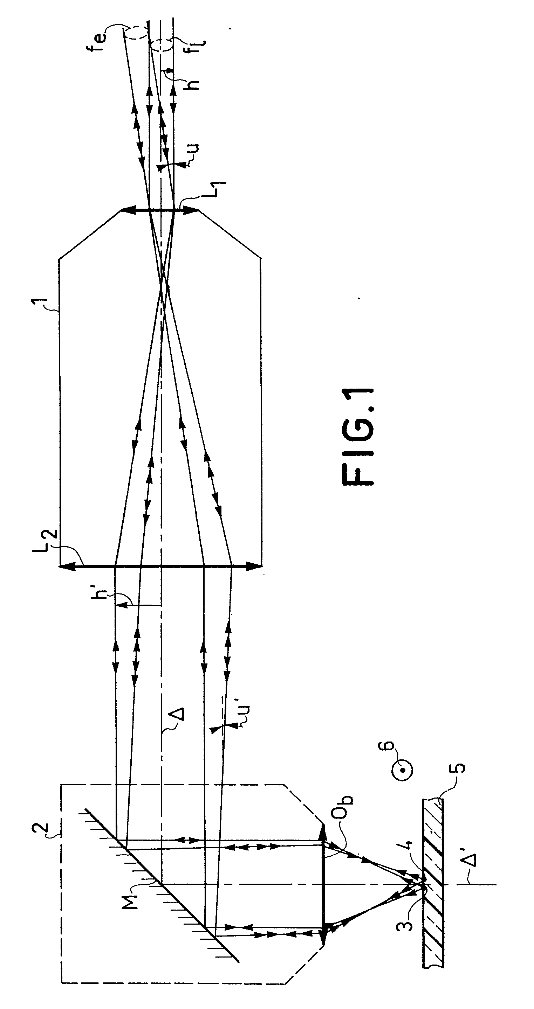

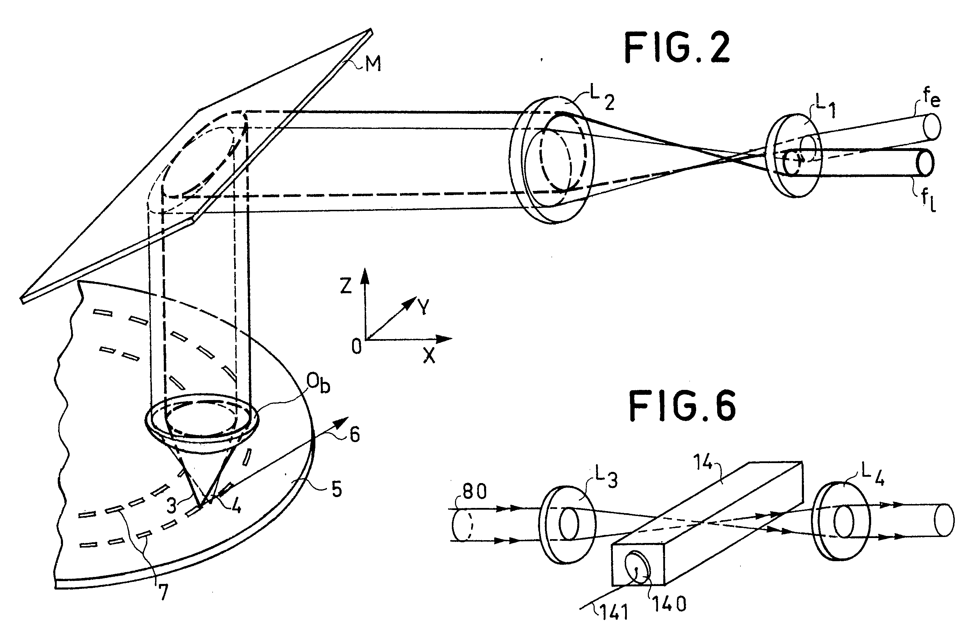

Ces dispositions sont illustrées par les figures 1 et 2. La figure 1 est le schéma optique dans un plan du dispositif d'accès à une piste selon l'invention.

Pour la lecture, un faisceau laser $f_1$ parallèle et polarisé, produit par une source laser (non représentée sur la figure 1), est agrandi à l'aide d'un afocal 1 comprenant les deux lentilles $L_1$ et $L_2$, dont le grossissement est tel que le faisceau émergeant, également parallèle, recouvre la pupille d'entrée d'un objectif $O_b$ de type microscope. Un miroir M est inséré entre l'afocal 1 et l'objectif $O_b$ de façon à dévier les rayons se propageant parallèlement à l'axe optique $\triangle$ dans une direction parallèle à l'axe $\triangle'$. L'objectif $O_b$ focalise le faisceau de lecture au point 3 sur le disque support d'information 5. Ce disque est animé d'un mouvement de rotation symbolisé par la flèche 6. L'objectif et le miroir sont solidaires d'un équipage mobile 2 constituant la tête d'enregistrement-lecture. L'avance de cet ensemble mobile peut être obtenue par tout moyen connu et, par exemple non limitatif, soit à l'aide d'un ruban entrainé par des poulies (comme c'est généralement le cas des traceurs de courbes), soit grâce à un écrou et une vis entrainant des billes (comme pour certains enregistreurs-lecteurs et des systèmes dits «Floppy-disques»), soit par un moteur linéaire. Ces dispositifs sortent du cadre de l'invention. L'afocal est fixe.

La structure de l'invention, dissociant les sources d'énergie lumineuses de la tête d'enregistrement-lecture proprement dite, permet de réduire la masse de l'équipage mobile à environ 200 grammes, dont 100 grammes pour le dispositif d'asservissement selon l'axe $\triangle'$ et 30 grammes pour le miroir galvanométrique et son dispositif d'entrainement, l'objectif ayant un poids négligeable. Cette masse réduite est compatible avec les temps d'accès moyens qui ont été précédemment mentionnés.

On utilise ensuite le même afocal pour le faisceau d'enregistrement, lequel ayant été préalablement modulé comme dans les enregistreurs-lecteurs classiques. Afin de différencier les taches de lecture et d'enregistrement sur le disque, on incline très légèrement le faisceau d'enregistrement $f_e$ par rapport au faisceau de lecture $f_1$. Le grandissement transversal (voir fig. 1) est donné par la relation $Y = \dfrac{h'}{h}$. Ce grandissement est beaucoup plus grand que 1, il s'en suit que le rapport des angles $\dfrac{u'}{u}$ est inférieur à 1. Le décentrement de la tache d'enregistrement sur la pupille d'entrée de l'objectif est donc très limité. On peut également négliger ce déplacement lors d'un déplacement radial de la tête. Il s'en suit que quelque soit la position de l'objectif le long de l'axe optique $\triangle$, le faisceau d'écriture est focalisé au foyer de l'objectif tout en assurant une bonne discrimination, en sortie de l'afocal, des faisceaux d'enregistrement et de lecture. Ce dernier point constitue une seconde exigence que la structure de l'invention permet de solutionner.

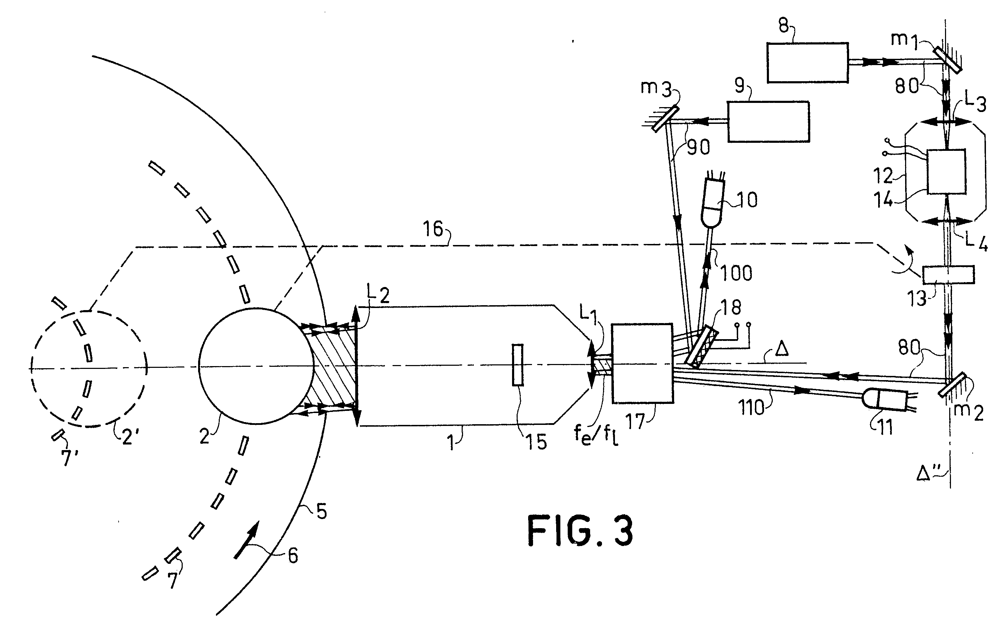

Comme il le sera décrit ultérieurement en relation avec la figure 3, pour assurer l'asservissement radial de la tête, il est fait usage d'un wobulateur. Pour les mêmes raisons que décrites ci-dessus, la conjugaison optique parfaite du wobulateur avec la pupille d'entrée de l'objectif n'est plus nécessaire.

La figure 2 illustre la marche des rayons lumineux dans l'espace. Le disque 5 est essentiellement parallèle à un plan XOY. L'asservissement vertical se faisant selon une direction parallèle à l'axe OZ. L'axe $\triangle$, ou axe optique de l'afocal comprenant deux lentilles $L_1$ et $L_2$, est parallèle à l'axe OX. Le miroir M a une inclinaison variant autour de $\dfrac{\pi}{4}$ radians par rapport au plan XOY.

A titre d'exemple non limitatif, des valeurs typiques sont: distances focales de $L_1$ : 8 mm et de $L_2$ : 100 mm; distance focale $O_b$ : 8.25 mm, ouverture numérique O.N : 0,455, diamètre 7.51 mm.

La figure 3 est un système enregistreur-lecteur de disque optique comportant le dispositif optique d'accès à une piste selon l'invention. La tête d'enregistrement-lecture comprenant l'objectif $O_b$ et le miroir M est figurée par le cercle 2. L'afocal porte la référence 1 et comporte les lentilles $L_1$ et $L_2$ ayant pour axe optique $\triangle$. Le disque 5 comporte des pistes d'enregistrement et/ou lecture 7, 7'. La voie d'enregistrement est constituée par les éléments consécutifs suivant: un laser polarisé 8 produisant un faisceau de rayons parallèles 80, dévié selon l'axe $\triangle''$ par un premier miroir $m_1$, un modulateur acousto-optique 12, une lame parallèle $\lambda/2$ orientable par rapport à l'axe $\triangle''$: 13, un second miroir $m_2$ déviant le faisceau 80 vers un élément séparateur biréfringent 17. Le faisceau d'enregistrement entre ensuite dans l'afocal 1 et après réflexion sur le disque est retourné vers ce même élément séparateur biréfringent 17 puis réfléchi par un wobulateur 18 en un faisceau 100, atteignant une cellule photoélectrique d'enregistrement 10. Une lame parallèle $\lambda/4$: 15 est en outre disposé sur le trajet optique entre les lentilles $L_1$ et $L_2$.

La voie de lecture comprend les éléments suivants: un laser polarisé 9 produisant un faisceau de rayons parallèles 90, dévié par un miroir $m_3$ avant d'atteindre la surface réfléchissante du wobulateur 18 et d'être dévié vers l'élément séparateur biréfringent 17. Le faisceau de lecture est ensuite agrandi par l'afocal 1

et, après réflexion sur le disque et retour par l'afocal 1, est renvoyé sur l'élément séparateur biréfringent 17 et transmis selon le faisceau 110 vers une cellule de lecture 11. Cette cellule de lecture 11 réalise deux fonctions: par différence, on obtient un signal d'erreur à l'aide de senseurs asymétriques ou astigmatiques qui donnent des informations sur la focalisation; par sommation, on obtient un signal haute fréquence de lecture. De tels procédés ont été décrits dans les deux demandes de brevet suivantes: la demande de brevet français n° 75.29705, déposé le 29 Septembre 1975 et publiée sous le n° 2 325 953; et la demande de brevet français n° 74.01 283, déposé le 15 Janvier 1974 et publiée sous le n° 2 271 590. La cellule est une cellule du type quatre quadrants, par exemple le modèle C30843 de la firme RCA.

La cellule d'enregistrement 10 peut être utilisée pour verifiér le signal d'enregistrement ainsi que pour localiser sur le disque avec précision les zones à enregistrer et en outre pour vérifier l'asservissement en puissance du laser selon un procédé qui va être décrit ultérieurement. La cellule utilisée peut être une cellule du type deux quadrants, par exemple le modèle BPX48 de la firme SIEMENS.

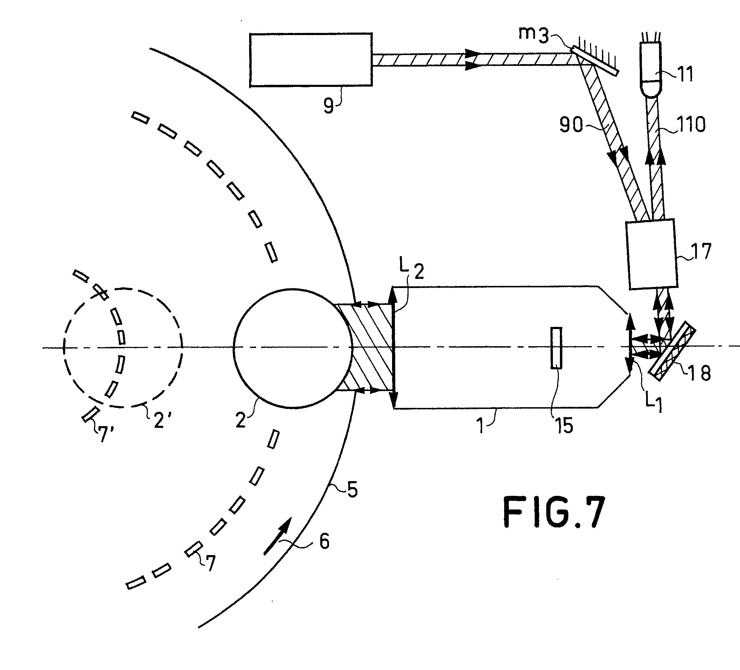

Le modulateur acousto-optique est par exemple un modulateur du type illustré sur la figure 6. Il comporte deux lentilles cylindriques $L_3$ et $L_4$ formant un système afocal pour le faisceau 80. Ce faisceau est focalisé par la première lentille dans un barreau de molybdate de plomb 14 comportant une pastille à son extrémité de niobate de lithium 140 reliée à une électrode 141. On applique sur cette électrode un signal composé d'impulsions électriques de fréquence 200 MHz. Il se produit dans le matériau du barreau 13 des ondes de volume interférant avec les ondes lumineuses. Il s'en suit que le faisceau à la sortie du barreau est modulé par ces ondes de volume à la fréquence d'excitation. Ce procédé de modulation est bien connu dans les enregistreurs-lecteurs actuellement utilisés et ne sera pas décrit plus avant.

Les miroirs de renvoi $m_1$ à $m_3$ de la figure 3 sont des miroirs en verre traités en multicouche. Le wobulateur 18 est constitué par une poutre vibrante comportant un élément piézo-électrique excité électriquement.

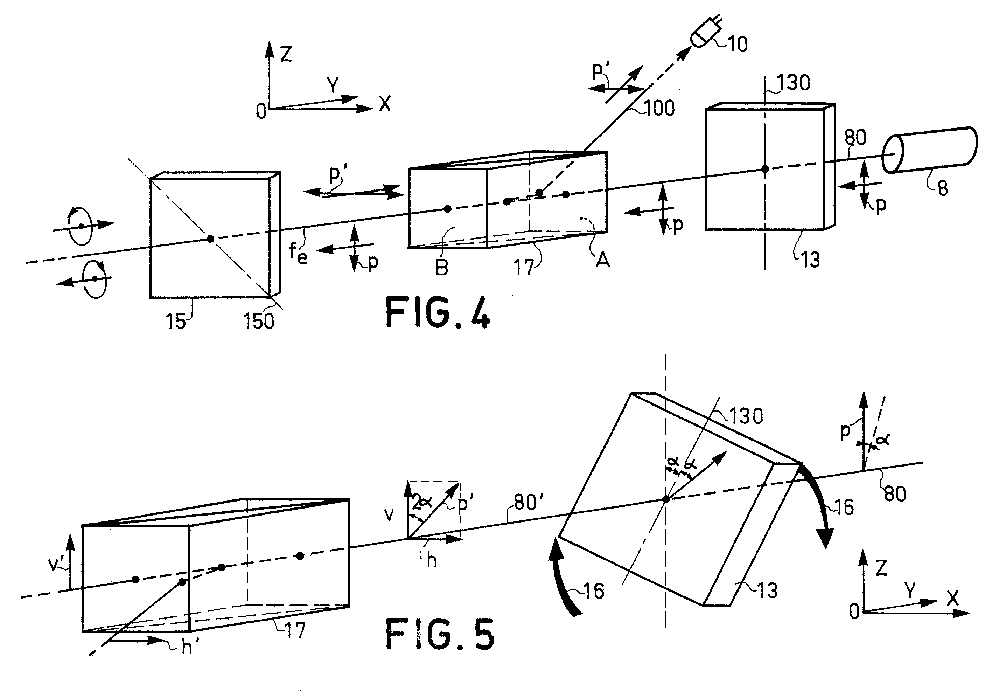

La marche des rayons va être explicitée avec plus de détails à l'aide des figures 4 et 5. Sur la figure 4 est représentée une source laser, par exemple le laser d'enregistrement 8 produisant un faisceau de rayons polarisés 80 suivant la direction p. Sur cette figure les miroirs de renvoi $m_1$ et $m_2$ ainsi que le modulateur électro-acoustique 12 n'ont pas été représentés. Le faisceau 80 atteint une lame parallèle $\lambda/2$: 13, dont l'axe optique est représenté par la ligne en pointillé 130, parallèle à l'axe OZ du trièdre de référence OXYZ. Il s'en suit que la polarisation du faisceau 80 étant également parallèle à cette direction le faisceau ressort de la lame parallèle 13 sans modification. Les rayons lumineux polarisés atteignent ensuite un élément biréfringent 17. Cet élément biréfringent peut être par exemple un Wollaston ou un Rochon. Cet élément est disposé dans l'espace de façon à transmettre sans modification une onde polarisée selon l'axe OZ. Cette onde transmise atteint ensuite la

lame parallèle $\lambda/4$, 15, située dans le système afocal 1 de la figure 3. L'axe optique de la lame est représenté par la ligne pointillé 150; il s'en suit que l'onde polarisée linéairement ressort de cette lame parallèle $\lambda/4$ polarisée circulairement et par exemple dans le sens levogyre. Cette onde va être transmise aux éléments de la tête d'enregistrement-lecture et réfléchie par le disque. Elle est retournée ensuite vers la lame $/4$ toujours polarisée circulairement mais dans le sens dextrogyre. Il s'en suit que cette onde est retournée vers l'élément biréfringent 17 polarisé horizontalement après traversée de la lame $\lambda/4$, c'est à dire suivant une direction parallèle à l'axe OX. L'élément biréfringent 17 joue alors le rôle de séparateur et l'onde polarisée selon une direction parallèle à OX est transmise dans le plan XOY vers une cellule de lecture 10. Pour que le système de la figure 3 fonctionne correctement, le faisceau de lecture (non représenté sur la figure 4), également polarisé, doit atteindre la face A de l'élément biréfringent 17 suivant une direction essentiellement parallèle à la direction du faisceau 100 et la direction de polarisation doit être également parallèle à l'axe OX. Il s'en suit que ce faisceau est dévié et ressort par la face B dans une direction essentiellement parallèle à celle du faisceau d'enregistrement $f_e$. Ces deux faisceaux forment cependant entre eux l'angle u (figure 1) nécessaire à la séparation.

Si maintenant on fait tourner la lame parallèle $\lambda/2$, 13, d'un angle $\alpha$ par rapport à la direction OZ, la direction de polarisation p du faisceau de rayons parallèles 80 fait également un angle $\alpha$ par rapport à l'axe optique de la lame 130. Il s'en suit que le faisceau émergeant 80' de la lame 13 voit sa direction de polarisation tourner d'un angle de $2\alpha$ par rapport à OZ. La nouvelle direction de polarisation est p'. On peut décomposer le vecteur polarisation p' (en le projetant sur les deux axes OZ et OX) en deux vecteurs d'amplitude respectives v et h. Le rayon polarisé suivant la direction p' est décomposé à la traversée de l'élément biréfringent 17 en deux rayons, l'un polarisé verticalement damplitude v', l'autre polarisé horizontalement d'amplitude h'. Seule la composante v' est transmise à la lame $\lambda/4$, 15, des figures 3 et 4. Il s'en suit que par ce procédé on peut modifier la puissance du faisceau d'écriture (car v' < p' selon la valeur de $\alpha$). Pour réaliser un asservissement en puissance on établit un lien mécanique entre la position de l'équipage mobile 2 et l'orientation angulaire $\alpha$ de la lame parallèle 15. Cet asservissement 16 peut être réalisé simplement par une courroie liée à l'équipage mobile 2 ou par un moteur annexe lié au moteur de translation selon l'axe $\triangle$.

A la place de la lame $\lambda/2$ on peut également insérer un polariseur. Cependant cette méthode présente l'inconvénient d'introduire des pertes d'insertion et de faire baisser le rendement. On peut également agir par voie électrique en agissant directement sur la commande du modulateur acousto-optique 12.

Outre ceux cités, d'autres types d'éléments biréfringents peuvent être utilisés. Comme il est bien connu, à chaque type d'élément biréfringent correspond des conditions d'incidence des rayons, ainsi que des conditions de polarisation des rayons ordinaire et extraordinaire.

Le rôle du wobulateur est d'imprimer au faisceau de lecture (dont la position radiale moyenne est assurée par le miroir galvanométrique M de la figure 1 et 2) une oscillation suivant une direction radiale et d'amplitude 0,1 $\mu m$ environ. La fréquence d'excitation est de 78 KHz.

On peut également étendre l'invention au cas d'un système optique utilisé pour la seule lecture d'informations pré-enregistrées sur un disque. Un exemple d'application intéressante est le cas où un disque enregistré à l'aide du système optique de la figure 3 est dupliqué et distribué à plusieurs utilisateurs possédant un système optique lecteur tel qu'illustré sur la figure 7.

Il suffit pour ce faire de supprimer les éléments appartenant à la voie enregistrement. On constate également une légère modification quant à la disposition des éléments de la voie lecture: on peut en effet placer le wobulateur 18 entre l'afocal 1 et l'élément séparateur biréfringent 17. Dans ce cas, et le faisceau entrant 90 et le faisceau 110 sont modulés. L'élément biréfringent 17 sert comme dans le cas de la figure 3 à séparer ces deux faisceaux.

On peut utiliser également le dispositif optique d'accès à une piste sur un support d'information mobile dans le cadre d'un vidéodisque bien que le temps d'accès ne soit pas aussi critique que dans les réalisations destinées à l'informatique. On peut également envisager la lecture par transparence et non plus par réflexion, comme il a été décrit au regard des figures 3 et 27. Les deux faisceaux de lecture et d'enregistrement sont alors transmis après agrandissement par l'afocal à la tête d'écriture-enregistrement et lus par des cellules placées en dessous du disque. Le support d'information mobile peut avoir la forme d'une bande lisible optiquement, portant des pistes longitudinales. Dans ce cas les dispositifs d'accès selon l'invention permet un saut rapide d'une piste à l'autre.

**Revendications**

1. Dispositif optique d'accès à une piste sur un support d'information mobile (5), enregistrable ou lisible optiquement par un rayonnement focalisé, comportant une source d'énergie radiante fixe comprenant des premier et second éléments rayonnants (9, 8) produisant respectivement des premier et second faisceaux de rayons parallèles (90-$F_l$, 80-$F_e$) captés par un équipage mobile (2) se déplaçant parallèlement à un axe déterminé par rapport au support d'information (5), comprenant un miroir de renvoi (M) et un objectif ($O_b$) focalisant le faisceau sur une piste prédéterminée (7) du support (5); et des moyens optiques grossissants fixes (1) de type afocal insérés entre l'équipage mobile (2) et les éléments rayonnants (8, 9) et dont l'axe optique ($\triangle$) est confondu avec ledit axe déterminé; dispositif caractérisé en ce que les moyens optiques grossissants fixes (1) de type afocal sont traversés simultanément par lesdits premier ($F_l$) et second ($F_e$) faisceaux de rayons parallèles et en ce qu'ils présentent un grossissement suffisant pour assurer simultanément, d'une part, un recouvrement total de la pupille d'entrée de l'objectif (O_b) par les premier et second faisceaux de rayons parallèles; d'autre part, une faible inclinaison (u'), l'un par rapport à l'autre, de ces faisceaux (F_l, F_e) dans la portion de chemins optiques comprise entre l'équipage mobile (2) et l'aval des moyens optiques grossissants fixes (1) de type afocal pour conserver ce recouvrement lors des déplacements de cet équipage mobile (1) parallèlement à l'axe déterminé ainsi qu'une forte inclinaison (u), l'un par rapport à l'autre, de ces faisceaux (F_l, F_e) de rayons parallèles en amont des moyens optiques grossissants fixes (1) de type afocal, de manière à séparer les chemins optiques de ces faisceaux de rayons parallèles; la direction de propagation du premier faisceau (F_l) de rayons parallèles étant confondue avec ledit axe optique (△).

2. Dispositif optique selon la revendication 1, caractérisé en ce que les moyens optiques de type afocal (1) sont constitués par deux lentilles convergentes (L_1, L_2) d'axe optique commun.

3. Dispositif selon l'une quelconque des revendications 1 ou 2, caractérisé en ce que les premier et second éléments rayonnants (9, 8) sont constitués par les émetteurs laser et en ce que les premier et second faisceaux parallèles (90-F_l, 80-F_e) sont polarisés linéairement suivant une première, et une seconde direction, les directions respectives de polarisation étant orthogonales entre elles.

4. Système de mémoire optique comportant un support (5) enregistrable lisible optiquement ainsi qu'un dispositif d'accès à une piste (7) portée par ce support selon la revendication (3); les pistes (7, 7') pouvant en outre réfléchir tout ou partie de l'énergie radiante qu'elles reçoivent; système caractérisé en ce qu'un séparateur biréfringent (17), est inséré entre les moyens optiques de type afocal (1) et les émetteurs (8, 9): les angles d'incidence des premier et second faisceaux de rayons parallèles sur une première face du séparateur biréfringent (7) et leur direction de polarisation étant tels que ces faisceaux se confondent avec les rayons ordinaire et extraordinaire de ce séparateur.

5. Système selon la revendication 4, caractérisé en ce qu'une lame à faces parallèles quart d'onde (15) est insérée sur le trajet optique des rayons des premier et second faisceaux (F_l, F_e) en aval du séparateur biréfringent (17) transforme les polarisations linéaires de ces premier et second faisceaux incidents en une polarisation circulaire et en ce que, après réflexion sur une des pistes (7) portées par le support d'informations (5) et retour inverse de l'énergie radiante, la lame à faces parallèles quart d'onde (15) retransforme les polarisations circulaires des premier et second faisceaux de rayons parallèles en des polarisations linéaires orthogonales entre elles (p, p'); les directions de polarisation ayant en outre tourné d'un angle de $\frac{\pi}{2}$ radians par rapport aux directions originelles des première et seconde directions de polarisation et les premier et second faisceaux de rayons parallèles se trouvant dévié après la traversée du séparateur biréfringent, respectivement suivant les directions des rayons extraordinaire et ordinaire.

6. Dispositif selon l'une quelconque des revendications 4 ou 5, caractérisé en ce que le second faisceau de rayons parallèles (80-F_e) étant le faisceau d'enregistrement, une lame à faces parallèles demi-onde (13) est insérée sous incidence normale entre le séparateur biréfringent (17) et le premier émetteur laser (8); et en ce que l'axe optique (130) de la lame à faces parallèles demi-ondes faisant un angle (α), réglable, avec la première direction de polarisation (p), le second faisceau voit sa direction de polarisation tourner d'un angle double (2α) et les rayons résultant étant décomposés lors de la traversée du séparateur biréfringent (17) en un rayon ordinaire, seul transmis aux moyens optiques de type afocal (1) et de direction de polarisation (v') parallèle à la première direction de polarisation (p), et en un rayon extraordinaire de direction de polarisation (h') orthogonale à la première direction de polarisation (p).

7. Dispositif selon l'une quelconque des revendications 4 ou 5, caractérisé en ce que le second faisceau de rayons parallèles (80-F_e) étant le faisceau d'enregistrement, un polariseur est inséré, sous incidence normale, entre le séparateur biréfringent (17) et le second émetteur laser (8), et en ce que l'axe optique de ce polariseur présente un angle (α), réglable, avec la première direction de polarisation, et les rayons résultant étant décomposés lors de la traversée du séparateur biréfringent en un rayon ordinaire, seul transmis aux moyens optiques de type afocal (1) et de direction de polarisation parallèle à la première direction de polarisation (p), et en un rayon extraordinaire de direction de polarisation orthogonale à la première direction de polarisation (p).

8. Dispositif selon l'une quelconque des revendications 6 ou 7, caractérisé en ce que des moyens de couplage mécaniques (16) reliés à l'équipage mobile (2) font varier de façon continue l'angle (α) réglable en relation prédéterminée avec la position de l'équipage mobile pour réaliser un asservissement en puissance du faisceau d'enregistrement (80-F_e).

9. Dispositif selon l'une quelconque des revendications 4 à 8, caractérisé en ce que le support de l'information mobile (5) est un disque portant des sillons (7, 7') concentriques ou en spirale et en ce que l'équipage mobile (2) se déplace radialement dans un plan parallèle à la surface du disque (5).

**Patentansprüche**

1. Optische Vorrichtung für den Zugriff auf eine Spur eines beweglichen Informationsträgers (5), der optisch durch eine fokussierte Strahlung beschrieben oder ausgelesen werden kann, mit einer feststehenden Strahlungsenergiequelle, die ein erstes und ein zweites Strahlungselement (9, 8) umfasst, welche ein erstes bzw. zweites Strahlungsbündel (90-F_l, 80-F_e) paralleler Strahlung erzeugen, die von einer bewegbaren Einheit (2) aufgefangen werden, die sich parallel zu einer Achse bewegt, welche in bezug auf den Informationsträger (5) bestimmt ist, mit einem Umlenkspiegel (M) und einem Objektiv (O_b), welches das Bündel auf eine vorbestimmte Spur (7) des Trägers (5) fokussiert; und mit feststehenden optischen Vergrösserungsmitteln (1) vom afokalen Typ, die zwischen die bewegbare Einheit (2) und die Strahlungselemente (8, 9) eingefügt sind und deren optische Achse (△) mit der genannten bestimmten Achse übereinstimmt; wobei die Vorrichtung dadurch gekennzeichnet ist, dass die feststehenden optischen Vergrösserungsmittel (1) afokalen Typs gleichzeitig von dem ersten ($F_I$) und zweiten ($F_e$) Bündel paralleler Strahlung durchquert werden und dass sie eine Vergrösserung aufweisen, die ausreicht, um gleichzeitig einerseits eine vollständige Überdeckung der Eingangspupille des Objektivs ($O_b$) durch das erste und das zweite Bündel paralleler Strahlung und zum anderen eine geringen Neigung (u') des einen dieser Bündel ($F_I$, $F_e$) in bezug auf das andere in demjenigen Teil der optischen Wege zu gewährleisten, der zwischen der bewegbaren Einheit (2) und in der in Ausbreitungsrichtung hinteren Seite der feststehenden optischen Vergrösserungsmittel (1) afokalen Typs enthalten ist, um diese Überdeckung während der Bewegungen dieser bewegbaren Einheit (1) parallel zu der bestimmten Achse sowie eine starke Neigung (u) dieser beiden Bündel ($F_I$, $F_e$) paralleler Strahlung in bezug aufeinander vor den feststehenden optischen Vergrösserungsmitteln (1) afokalen Typs zu bewahren, so dass die optischen Wege dieser beiden Bündel paralleler Strahlung getrennt werden; wobei die Ausbreitungsrichtung des ersten Bündels ($F_I$) paralleler Strahlung mit der genannten optischen Achse ($\triangle$) zusammenfällt.

2. Optische Vorrichtung nach Anspruch 1, dadurch gekennzeichnet, dass die optischen Mittel afokalen Typs (1) durch zwei Konvergenzlinsen ($L_1$, $L_2$) gebildet sind, die eine gemeinsame optische Achse aufweisen.

3. Vorrichtung nach Anspruch 1 oder 2, dadurch gekennzeichnet, dass das erste und das zweite Strahlungselement (9, 8) durch Lasersender gebildet sind und dass das erste und das zweite Bündel paralleler Strahlung ($90-F_I$, $80-F_e$) jeweils linear in einer ersten bzw. zweiten Richtung polarisiert sind, wobei die beiden Polarisationsrichtungen zueinander senkrecht sind.

4. Optisches Speichersystem mit einem Träger (5), der optisch beschreibbar und auslesbar ist, sowie mit einer Zugriffsvorrichtung für den Zugriff auf eine Spur (7) dieses Trägers gemäss Anspruch 3; wobei die Spuren (7, 7') ferner geeignet sind, die von ihren empfangene Strahlungsenergie teilweise oder ganz zu reflektieren; wobei das System dadurch gekennzeichnet ist, dass ein Doppelbrechungs-Teilerelement (17) zwischen die optischen Mittel afokalen Typs (1) und die Sender (8, 9) eingefügt ist; wobei die Einfallswinkel des ersten bzw. zweiten Bündels paralleler Strahlung auf einer ersten Fläche des Doppelbrechungs-Teilerelementes (7) und ihre Polarisationsrichtung derart gewählt sind, dass diese Bündel mit dem ordentlichen bzw. unordentlichen Strahl dieses Trennelementes zusammenfallen.

5. System nach Anspruch 4, dadurch gekennzeichnet, dass ein Viertelwellenlängen-Plättchen (15) mit parallelen Flächen auf dem optischen Weg der Strahlung des ersten und zweiten Bündels ($F_I$, $F_e$) in Ausbreitungsrichtung hinter dem Doppelbrechungs-Trennelement (17) eingefügt ist und die lineare Polarisation des ersten und des zweiten einfallenden Bündels in eine Zirkularpolarisation umwandelt, und dass das Viertelwellenlängenplättchen (15) mit parallelen Flächen, nach Reflexion der Strahlungsenergie an einer der Spuren (7) auf dem Informationsträger (5) und umgekehrtem Rücklauf, die Zirkularpolarisationen des ersten und des zweiten Bündels paralleler Strahlung in zueinander senkrechte lineare Polarisationen (p, p') zurücktransformiert; wobei ferner die Polarisationsrichtungen um einen Winkel $\pi/2$ Radiant in bezug auf die ursprüngliche erste bzw. zweite Polarisationsrichtung des ersten bzw. zweiten Bündels paralleler Strahlung verdreht sind und nach dem Durchqueren des Doppelbrechungs-Teilerelementes in Richtung des ordentlichen Strahls bzw. unordentlichen Strahls abgelenkt sind.

6. System nach Anspruch 4 oder 5, dadurch gekennzeichnet, dass das zweite Bündel paralleler Strahlung ($80-F_e$) das Aufzeichnungsbündel ist und ein Halbwellenlängenplättchen (13) mit parallelen Flächen unter senkrechtem Einfallswinkel zwischen das Doppelbrechungs-Teilerelement (17) und den ersten Lasersender (8) eingefügt ist; und dass die optische Achse (130) des Halbwellenlängenplättchens mit parallelen Flächen einen einstellbaren Winkel ($\alpha$) mit der ersten Polarisationsrichtung (p) bildet, wobei die Polarisationsrichtung des ersten Bündels um den doppelten Winkel ($2\alpha$) gedreht wird und die resultierenden Strahlen beim Durchqueren des Doppelbrechungs-Teilerelements (17) zerlegt werden in einen ordentlichen Strahl, der als einziger zu den optischen Mitteln afokalen Typs (1) durchgelassen wird und dessen Polarisationsrichtung (v') parallel zu der ersten Polarisationsrichtung (p) ist, und in einen unordentlichen Strahl, dessen Polarisationsrichtung (h') senkrecht zu der ersten Polarisationsrichtung (p) ist.

7. System nach Anspruch 4 oder 5, dadurch gekennzeichnet, dass das zweite Bündel ($80-F_e$) paralleler Strahlung das Aufzeichnungsbündel ist und ein Polarisator unter senkrechtem Einfallswinkel zwischen das Doppelbrechungs-Teilerelement (17) und den zweiten Lasersender (8) eingefügt ist, und dass die optische Achse dieses Polarisators einen einstellbaren Winkel ($\alpha$) mit der ersten Polarisationsrichtung aufweist und die resultierenden Strahlen beim Durchqueren des Doppelbrechungs-Teilerelementes zerlegt werden in einen ordentlichen Strahl, der allein zu den optischen Mitteln afokalen Typs (1) durchgelassen wird und dessen Polarisationsrichtung parallel zu der ersten Polarisationsrichtung (p) ist, und in einen unordentlichen Strahl, dessen Polarisationsrichtung senkrecht zu der ersten Polarisationsrichtung (p) ist.

8. System nach Anspruch 6 oder 7, dadurch gekennzeichnet, dass mechanische Kopplungsmittel (16), die mit der bewegbaren Einheit (2) verbunden sind, den einstellbaren Winkel ($\alpha$) kontinuierlich in einer vorbestimmten Abhängigkeit von der Position der bewegbaren Einheit verändern, um eine Leistungsregelung des Aufzeichnungsbündels ($80-F_e$) zu verwirklichen.

9. System nach einem der Ansprüche 4 bis 8, dadurch gekennzeichnet, dass der bewegbare Informationsträger (5) eine Platte ist, die konzentrische oder spiralförmige Rillen (7, 7') trägt, und dass die bewegbare Einheit (2) sich radial in einer Ebene parallel zur Oberfläche der Platte (5) bewegt.

## Claims

1. Optical device for accessing a track on a movable information carrier (5) which is optically recordable or readable by focused radiation, comprising a stationary radiating energy source comprising first and second radiating members (9, 8) producing first and second parallel radiation beams ($90-F_I$, $80-F_e$), respectively, captured by a movable unit (2) moving parallel to an axis determined with respect to the information carrier (5), comprising a deflection mirror (M) and an objective ($O_b$) focusing the beam onto a predetermined track (7) of the carrier (5); and stationary optic magnification means (1) of afocal type inserted between the movable unit (2) and the radiating members (8, 9) and the optical axis ($\triangle$) of which is coincident with said determined axis; the device being characterized in that the stationary optical magnification means (1) of afocal type are simultaneously crossed by said first ($F_I$) and second ($F_e$) beams of parallel radiation, and in that they provide a magnification which is sufficient for simultaneously assuring, on the one hand, a total coverage of the input pupil of the objective ($O_b$) by the first and second beams of parallel radiation and, on the other hand, a reduced mutual inclination (u') of these beams ($F_I$, $F_e$) across the portion of the optical paths comprised between the movable unit (2) and the downstream side of the stationary optical magnification means (1) of afocal type for maintaining this coverage during the movements of this movable unit (1) parallel to the determined axis, as well as a strong mutual inclination (u) of these beams ($F_I$, $F_e$) of parallel radiation upstream from the stationary optical magnification means (1) of afocal type, in a manner to separate the optical paths of these beams of parallel radiation; the propagation direction of the first beam ($F_I$) of parallel radiation being coincident with said optical axis ($\triangle$).

2. Optical device in accordance with claim 1, characterized in that the optical means (1) of afocal type are formed of two convergent lenses ($L_1$, $L_2$) having a common optical axis.

3. Device in accordance with any of claims 1 and 2, characterized in that the first and second radiating members (8, 9) are formed of laser sources and in that the first and second parallel beams ($90-F_I$, $80-F_e$) are plane polarized in accordance with first and second directions, the respective polarization directions being mutually perpendicular.

4. Optical storage system comprising an optically recordable and readable carrier (5) as well as a device for accessing a track (7) carried by this carrier, in accordance with claim 3; the tracks (7, 7') being further adapted to reflect all or part of the radiant energy they receive; the system being characterized in that a birefringent separator (17) is inserted between the optical means (1) of afocal type and the sources (8, 9); the incidence angles of the first and second beams of parallel radiation on a first face of the birefringent separator (17) as well as their polarization directions being such that these beams correspond to the ordinary and extraordinary beams of this separator.

5. System in accordance with claim 4, characterized in that a quarter-wave plate (15) having parallel faces is inserted into the optical paths of the first and second beams ($F_I$, $F_e$) upstream from the birefringent separator (17) for transforming a linear polarization of the first and second incident beams into a circular polarization, and in that, after reflection by one of the tracks (7) carried by the information carrier (5) and return of the radiant energy in the opposite sense, the quarter-wave plate (15) having parallel faces retransforms the circular polarizations of the first and second beams of parallel radiation into mutually perpendicular plane polarizations (p, p'); the polarization directions having, in addition, been turned about an angle of $\frac{\pi}{2}$ radian with respect to the original directions of the first and second polarization directions, and the first and second beams of parallel radiation being deflected into the ordinary and extraordinary directions, respectively, of the birefringent separator after having crossed the latter.

6. System in accordance with any of claims 4 and 5, characterized in that the second beam of parallel radiation ($80-F_e$) being the recording beam, a half-wave plate (13) having parallel faces is inserted between the birefringent separator (17) and the first laser source (8) under normal incidence; and in that the optical axis (130) of the half-wave plate havin parallel faces forms an adjustble angle ($\alpha$) with the first polarization direction (p), the second beam having its direction of polarization turned about twice the angle ($2\alpha$) and the resulting rays being seprated during their traversal of the birefringent separator (17) into an ordinary ray, only this ray being transmitted to the optical means of afocal type (1), and having a polarization direction (v') which is parallel to the first direction of polarization (p), and into an extraordinary ray having a polarization direction (h') perpendicular to the first polarization direction (p).

7. System in accordance with any of claims 4 and 5, characterized in that, the second beam of parallel radiation ($80-F_e$) being the recording beam, a polarizer is inserted between the birefringent separator (17) and the laser source (8) under normal incidence, and in that the optical axis of this polarizer forms an adjustable angle ($\alpha$) with the first polarization direction, and the resulting rays being separated during the traversal of the birefringent separator into an ordinary ray, only this ray being transmitted to the optical means of afocal type (1) and having a direction of polarization which is parallel to the first direction of polarization (p), and into an extraordinary ray the polarization direction of which is perpendicular to the first direction of polarization (p).

8. System in accordance with any of claims 6 and 7, characterized in that mechanical coupling means (16) connected to the movable unit (2) vary the adjustable angle ($\alpha$) continuously in accordance with a predetermined relation to the position of the movable unit, forming a power control of the recording beam ($80-F_e$).

9. System in accordance with any of claims 4 to 8, characterized in that the movable information carrier (5) is a disc carrying concentric or spiral grooves (7, 7') and in that the movable unit (2) travels radially in a plane parallel to the surface of the disc (5).

FIG.1

FIG.2

FIG.6

FIG. 3

**FIG.4**

**FIG.5**

FIG.7